# EUROPEAN PATENT APPLICATION

(11) **EP 1 460 736 A1**
(43) Date of publication of application: **22.09.2004**
(21) Application number: 03290702.4
(22) Date of filing: 19.03.2003
(51) Int. Cl.: H01S 3/30

(54) **Multiwavelength depolarized raman pumps**

(71) Applicant: ALCATEL, 75008 Paris (FR)
(72) Inventor: Charlet, Gabriel, 91190 Villiers-Le-Bacle (FR)
(74) Representative: Rausch, Gabriele, Dr.

(57) **Abstract**

The invention is related to a Raman pump source with a first laser diode (40) and a second laser diode (41), a coupler (43) and a polarization beam combiner (46). The signals of the two laser diodes are combined in a polarization maintaining coupler (43) with two in- and two outputs, and the outputs of the coupler (43) are linked to the polarization beam combiner. The two outputs of the coupler (43) and the two inputs of the polarization beam combiner are linked by polarization maintaining fibers (44, 45).

## Description

### Background of the Invention

The present invention relates to fiber-optic communications networks, and more particularly, to multi wavelength pump systems for Raman amplifiers in fiber-optic communications networks.

Fiber-optic networks are used to support voice and data communications.
In optical networks that use wavelength division multiplexing, multiple wavelengths of light are used to support multiple communications channels on a single fiber.
Optical amplifiers are used in fiber-optic networks to amplify optical signals. For example, optical amplifiers may be used to amplify optical data signals that have been subject to attenuation over fiber-optic links. A typical amplifier may include erbium-doped fiber coils that are pumped with diode lasers. Raman amplifiers have also been investigated. Discrete Raman amplifiers may use coils of fiber to provide Raman gain. Distributed Raman amplifiers provide gain in the transmission fiber spans that are used to carry optical data signals between network nodes.

The fiber in Raman amplifiers may be pumped by single-wavelength sources. However, the Raman gain spectrum produced by a single-wavelength source often does not have the spectral shape that is desired.

Amplifier systems with non-flat gain spectra amplify optical signals on channels at different wavelengths by different amounts. This is often not acceptable, particularly in communications links with a number of cascaded amplifiers. Moreover, other non-flat spectral shapes may be desired.

The gain spectrum of a Raman amplifier may be modified using a spectral filter. For example, a gain equalization filter may be used to produce a relatively flat gain spectrum by introducing optical losses that compensate for the non-flat shape of the Raman gain spectrum. However, the optical losses associated with using the filter consume optical power
Another approach for pumping Raman amplifiers involves using a Raman pump source based on multiple diode laser pumps, each of which operates at a different pump wavelength. With this type of approach, the diode laser pumps are each driven at an appropriate current to provide a Raman gain contribution. The overall gain of the Raman amplifier is determined by the Raman gain contributions of each of the individual Raman pump lasers. (when multiple Raman pumps are used, there is a power transfer between the lower wavelength pump to the higher wavelength pump. Due to this interaction between the pump, the overall gain of the Raman amplifier is not exactly the sum of the gain due to each Raman pump when the pump are alone).

If a sufficient number of diode laser pumps are used, the overall gain of the Raman amplifier may be made flat. Because gain equalization filters are avoided, the noise figure of the Raman amplifier may be improved. The US 6,433,921 discloses a device for pumping a Raman fiber with a multi laser source. The light of the diode lasers is polarized. If polarized light is used to pump a Raman fiber the Raman gain produced by the fiber is polarization sensitive. In a result the gain is not the same for all diode laser signals. This is generally not desired. Laser diodes need to be depolarized and then the single laser diode signals must be multiplexed together. The US 6,433,921 describes a solution with a depolarizer. This device consists of a polarization maintaining fiber with the long axis of birefringence aligned at 45 degree from the laser diodes optical axis. Finally three components - two depolarizer and a multiplexer is necessary to depolarize a single source.
It is also known from prior art that two laser diodes can be combined by a Polarization Beam Combiner to get a depolarized laser source. To achieve an acceptable pump source with sufficient flatness over the C-Band at least 4 sources must be combined by a Polarization Bean Combiner. We need 2 Raman pump wavelengths in order to have a gain flat enough over the C Band (1529nm - 1561 nm) or C+ Band (1529nm -1567nm), if we use two laser diodes with a polarization beam combiner per wavelength, we need 4 Raman laser diodes.

It is the objective of the invention to provide a multi wavelengths pump source for a Raman amplifier with reduced number of single components and a resulting signal quality of the Raman laser with a flatness of about 8 % ripple in gain over 32nm or 38nm bandwidth which correspond to the C Band or the C+ band.

### SUMMARY OF THE INVENTION

This and other objects of the invention are accomplished in accordance with the present invention by providing multi wavelength light sources that may be used as Raman pumps for Raman amplifiers. The Raman amplifiers based on the multi wavelength pumps may be used in fiber-optic communications networks having communications links that support channels operating at one or more different wavelengths. The Raman amplifiers may be based on distributed or discrete Raman amplifier arrangements. Raman gain is provided by pumping fiber with the multi wavelength Raman pump. The fiber may include one or more coils of fiber such as dispersion-compensating fiber, may be a span of transmission fiber, or may be any suitable combination of coils and transmission fiber spans.

The gain spectrum produced by pumping the fiber in a Raman amplifier with the multi wavelength Raman pump is (near) flat.

The Raman amplifier may have a control unit. The control unit may be used to control the operation of the Raman pump. For example, the control unit may be used to adjust the pump power produced at each of the pump wavelengths to produce the desired spectral shape for the Raman gain. The control unit may be used to adjust the pump power produced at each of the pump wavelengths to produce the desired spectral Raman gain shape for different types of gain fibers.

Further features of the invention and its nature and various advantages will be more apparent from the accompanying drawings and the following detailed description of the preferred embodiments.

The Raman pump depolarizer and multiplexer allow to combine two wavelengths whatever the wavelength . The device is not wavelength sensitive like a classic multiplexer. This is an advantage if you want to modulate the Raman laser diode over a certain wavelength bandwidth. In a result it could allow to have a Raman gain shape more flat versus the wavelength.

### BRIEF DESCRIPTION OF THE DRAWINGS

FIG. 1 is a schematic diagram of an illustrative fiber-optic communications link including Raman amplifier equipment in accordance with the present invention.
FIG. 2 is a schematic diagram of illustrative amplifier equipment including a distributed Raman amplifier and an erbium-doped fiber amplifier in accordance with the present invention.
FIG. 3 is schematic view of a multi wavelength source with depolarization means.

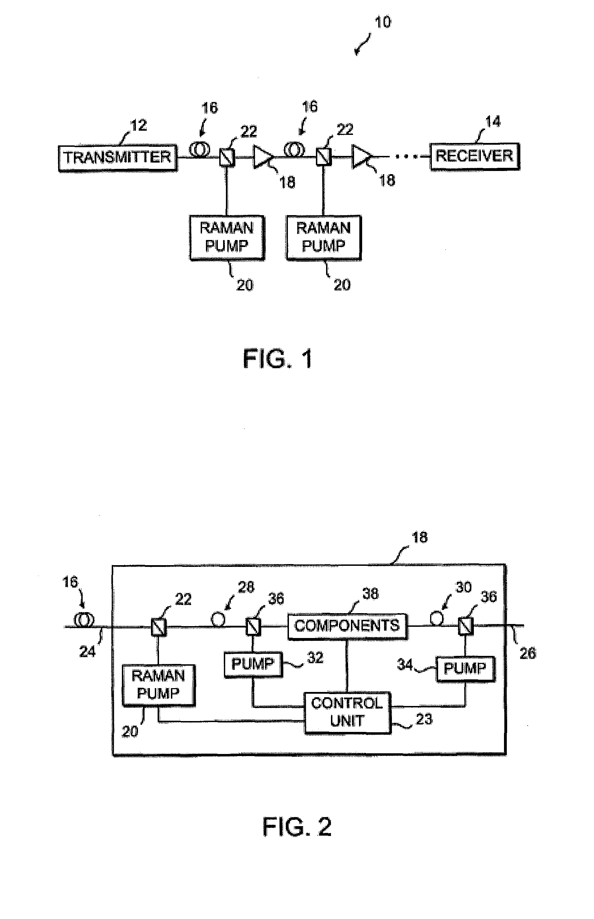

An illustrative optical communication network 10 with Raman amplifiers is shown in Fig. 1. A transmitter 12 and a receiver 14 are connected via several fiber spans 16. In the transmission line several amplifiers 18 and couplers 22 are linked. The couplers 22 are connected to Raman pumps 20.

A transmitter 12 transmits information to a receiver 14 over a couple of fiber links. Each fiber link includes a span 16 of optical transmission fiber . Fiber spans 16 can have a length of up to 150 km. The communication links are used to support wavelength division multiplex arrangements in which multiple communication channels are provided using multiple wavelengths of light. Optical amplifiers 18 are used to amplify the optical signals between successive spans of fiber 16. Optical amplifiers are commonly erbium doped amplifier stages or other rare earth doped fibers. Also semiconductor amplifiers, Raman amplifiers and combination of such amplification means are in use. The fiber spans can be Raman amplifying fibers with Raman pumps where multi wavelengths Raman sources are used. This create Raman gain that counteracts the attenuation normally experienced along a transmission fiber link. The arrangement in Fig. 1 is a counter-pumping arrangement but distributed Raman amplifiers of this type can also run in a co-pumping or a combination of co- and counter pumping. Raman pumps 20 must feed un-polarized light into the fiber to create polarization independent gain in the fiber. The pump light of the Raman pumps 20 is coupled into fiber via couplers 22.

An example of an optical amplifier is given in Fig. 2 The Raman pump 20 provides light at multiple pump wavelength for pumping the fiber span 16. Pump light is controlled by a control unit 23. This example does not limit the scope of the invention. Each other arrangement with a multiple pump source as a part of an amplifier or an other suitable network element can comprise the invention Raman pump. In the amplifier 18 of Fig. 2 optical input signals from the span 16 are provided to input 24 and corresponding output signals that have been amplified in the amplifier 18 are fed into the output 26. Optical gain is achieved by lengths of rare earth doped fibers 28 and 30. This lengths of amplifying fibers 28, 30 are optically pumped by pumps 32 and 34. In general amplifiers comprises also other components like filters, isolators , multiplexers and so on that are schematically represented by the box 38.
Control unit 23 is based on electronic devices like micro processors to control and adapt the amplifier 18 to the network needs.

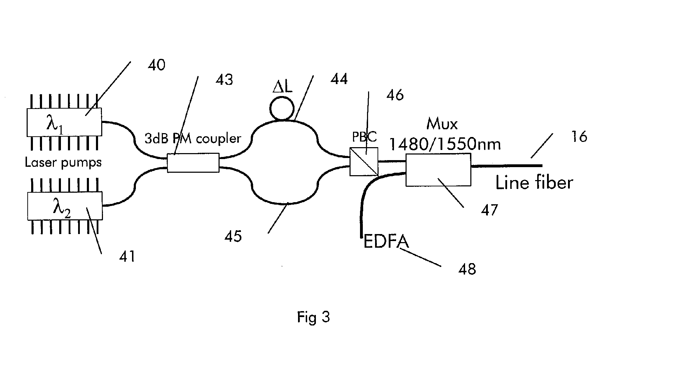

Fig. 3 shows a Raman pump 20 connected to a fiber span 16.
A first laser source 40 and a second laser source 41 are connected to a coupling device 43.. This coupling device has two input and two outputs. The outputs of the coupling device 43 are connected via a first fiber length 44 and a second fiber length 45 to a Polarization Beam combiner 46. The output of the Polarization Beam Combiner is linked to the fiber span 16 though the Multiplexer 1480/1550nm (also call WDM coupler). In an arrangement where the Raman amplifier replaces the first stage of an Erbium doped amplifier the signals of the Raman pump and the signals of the Erbium doped amplifying fiber 48 are combined in a wavelength multiplexer 47. The wavelength multiplexer is always needed to sent the Raman pump into the line whatever the first stage of the EDFA is suppressed or not, the WDM multiplxer allow to sent the 14xx pump power backward in the span and to transmit the 1550nm signal forward with a minimum of loss. Typically, the loss is 0.5dB for the 14xx pump and 0.5dB for the 1550nm signal).

The two laser diodes emits wavelengths lambda 1 and lambda 2. The two original signals are polarized. The two wavelengths are fed to the optical coupler 43 which is a 3 dB polarization maintaining coupler. The two outputs of the coupler 43 contains both wavelengths fed into the two inputs of the coupler.
The lengths of fibers 44 and 45 are polarization maintaining fiber lengths. The PMF consists of birefringence material with a main polarization axis (either the slow axis or the fast axis) aligned with the polarization of the laser light. In our case, we do not use the PMF to depolarize the signal.

When a PMF is used to depolarize a signal, the signal is effectively sent at 45° of the main axis of the PMF, but the index variation deltaN between the fast axis and the slow axis of the PMF is near 10-3. The product of the length L of the PMF with the index variation L x deltaN has to be higher than the coherence length. In our case, the length of the PMF has only to be higher than the coherence length and the signal is sent along the main axis of the PMF). The two lengths of PMF have not the same fiber lengths. The difference of the length has to be longer than the coherence length of the laser sources. In our case, we have to sent the polarization of the light parallel to the slow, or to the quick, axis of the PM fiber to maintain the polarization of the light. If the polarization of the light is not maintain, the light will not be transmit through the polarization beam combiner which can allow to only one polarization to be transmit)
If the line width is different for the two sources, the difference of length has to be larger than the coherence length of both laser source in order to depolarize both laser sources )As an example: for a laser signal of 100 GHz the coherence length is approximately 3 mm. The difference between the two PMF lengths must be more than 3 mm.

The insertion loss of the Raman pump is very low. The excess loss is lower than 1 dB where 0.5 dB loss arise at the coupler and another 0.5 at the Polarization Beam combiner. Then 0.5dB insertion loss is due to the WDM multiplxer (or circulator) in order to sent the power in the transmission line backward (and to transmit the signal forward)

For the two laser diodes with the wavelengths lambda 1 and lambda 2 high power diodes with wavelengths 14xx nm are available. The output power can exceed 400 mW for each laser diode. It allow to send more than 550mW in the transmission line (0.5dB insertion loss for the 3dB coupler, 0.5dB insertion loss for the PBS and 0.5dB for the WDM multiplexer or the circulator, so the total insertion loss is 1.5dB per wavelength (it correspond to 0.707), so the total optical power sent in the transmission line is 2x400mWx0.707~550mW). This optical power is enough to provide near 10dB Raman gain (but the Raman gain is different for each type of fiber, NZDSF or SMF....) which is sufficient to improve the Noise Figure of the hybrid Raman-Erbium amplifier.

## Claims

1. Raman pump source comprising a first laser diode (40) and a second laser diode (41), a coupler (43) and a polarization beam combiner (46), wherein the signals of the two laser diodes are combined in a polarization maintaining coupler (43) with two in- and two outputs, and the outputs of the coupler (43) are linked to the Polarization beam combiner, wherein the two outputs of the coupler (43) and the two inputs of the polarization beam combiner are linked by polarization maintaining fibers (44, 45) Raman pump source according claim 1 wherein the lengths of the polarization maintaining fibers (44, 45) differs from each others according the coherence lengths of the laser diodes.

2. Raman pump source according claim 1 wherein the polarization beam combiner is linked to one input of a wavelength multiplexer where the second input is connected to an erbium doped fiber amplifier.

3. Raman pump source according claim 1 wherein the polarization beam combiner is linked to one input of a circulator where the second input is connected to an erbium doped fiber amplifier

4. Communication Network with transmitters, receivers , transmission links and several amplifiers pumping the Raman amplifiers with the Raman pump according claim 1.
